# EUROPEAN PATENT APPLICATION

(11) **EP 1 953 431 A2**
(43) Date of publication of application: **06.08.2008**
(21) Application number: 08250324.4
(22) Date of filing: 26.01.2008
(51) Int. Cl.: F16K 15/04

(54) **A shuttle valve assembly**

(30) Priority: 02.02.2007 GB 0702005
(71) Applicant: Brooks, Paul John, 31 The Fitches Knodishall, Saxmundham, IP17 1UX (GB)
(72) Inventor: Brooks, Paul John, 31 The Fitches Knodishall, Saxmundham, IP17 1UX (GB)
(74) Representative: McLean, Robert Andreas

(57) **Abstract**

The present invention relates to a shuttle valve assembly 1. The valve assembly 1 has a housing 2, one or more shuttle valves 7, 8, 9 inside the housing 2 including an upstream first shuttle valve 7 and optionally at least one additional downstream shuttle valve 8, 9 connected in series with the first shuttle valve 7. Each shuttle valve has two inlet ports 71, 72, 81, 82, 91, 92 and one outlet port 73, 83, 93 and a movable shuttle 74, 84, 94. The housing has at least two segments 3, 4, 5, 6, the or each shuttle valve 7, 8, 9 being split across adjacent first and second segments with one inlet port being in said first segment and the other inlet port and the outlet port being in said second segment. The outlet port 73, 83, 93 of the or each shuttle valve includes a void 11 that extends along an interface 34, 45, 56 between adjacent segments of the housing 2.

## Description

### BACKGROUND

### a. Field of the Invention

The present invention relates to a shuttle valve assembly comprising one or more shuttle valves.

### b. Related Art

Shuttle valves are used in many types of pneumatic or hydraulic control systems, referred to hereinafter for convenience as "fluid" control systems. A shuttle valve is a passive device having no power supply of its own. Shuttle valves are often used in pneumatic control applications when a signal is required to be selected from two or more different sources. Also known as "OR" valves, shuttle valves allow a signal to pass through from either input A or B (or both) and will allow the reverse flow of system exhaust through these same inputs. A shuttle valve selects the higher of two pressures, a function that is to be considered when designing fluid control circuitry. A shuttle valve may also be connected in series with the output of a downstream shuttle valve such that the output of the downstream shuttle valve is connected with one of two inputs of the upstream shuttle valve. In this way a plurality of shuttle valves can be connected together in series.

Shuttle valves are also used in certain fluid control systems where the supply of fluid to a subsystem must be from more than one source to meet reliability or safety requirements. For example, shuttle valves may be used in emergency backup systems where the shuttle valve switches in an emergency pressure source in the event of a normal pressure system failure. Usually, the emergency system will actuate only essential components. One useful feature of shuttle valves is that these can be used to isolate the normal system from an alternate or emergency system. Shuttle valves are typically small and mechanically simple, yet are a key component of many fluid control systems.

Because a plurality of shuttle valves may be connected in series, there is the need to provide a range of different types of valve assemblies, having two, three or four, etc inputs and one output. A suitable shuttle valve is then selected for any particular application. If in the future it is desired to change the number of inputs, then the shuttle valve will need to be swapped for a different type of valve. This means that it is often necessary for a manufacturer or user to make or keep in stock a large number of different types of shuttle valve assemblies. This is inconvenient and potentially expensive.

A related problem arises if it becomes necessary to repair or refurbish a shuttle valve, owing to the number of different parts which may need to be kept on hand.

It is an object of the present invention to provide a more convenient valve assembly having one or more shuttle valves.

### SUMMARY OF THE INVENTION

According to the invention, there is provided a valve assembly, comprising a housing, at least one shuttle valve inside the housing including a first shuttle valve and optionally at least one additional downstream shuttle valve connected in series with the first shuttle valve, wherein:
- the or each shuttle valve has two inlet ports and one outlet port and a movable shuttle;
- the housing has at least two segments, the or each shuttle valve being split across adjacent first and second segments with one inlet port being in said first segment and the other inlet port being in said second segment; and
the outlet port of the or each shuttle valve includes a void that extends along an interface between adjacent segments of the housing.

In the case where there is just one shuttle valve split across adjacent first and second segments, the assembly will comprise two input inlets and one output outlet which extend through the housing to connect with the shuttle valve. Each segment then may have one input inlet, the first segment having one input inlet that connects with a first inlet port of the shuttle valve and the second segment having the other input inlet that connects with a second inlet port of the shuttle valve. The second segment may then have the output outlet which connects with the outlet port of said shuttle valve.

In the case where there are at least two shuttle valves connected in series including the above-mentioned first shuttle valve, a final downstream shuttle valve and optionally one or more intermediate shuttle valves, the assembly may comprise at least three input inlets and one output outlet which extend through the housing to connect with the shuttle valves. Each segment may then have one input inlet, each input inlet connecting with a first inlet port of a shuttle valve. One segment then has the output outlet which connects with the outlet port of the final shuttle valve. For each pair of adjacent shuttle valves connected in series the outlet port of the downstream shuttle valve is then connected with a second inlet port of the upstream shuttle valve.

The valve assembly according to the invention may readily be expanded to any number of shuttle valves connected in series, owing to the convenient use of the void that extends along an interface between adjacent segments of the housing. In particular, the invention allows the use of uniform intermediate segments which may be connected together with the shuttle valves in series.

In the case where there are at least three shuttle valves connected in series, the assembly may therefore comprise at least two identical or mirror image intermediate segments.

In order to facilitate connections to the shuttle valve, the assembly may have adjacent shuttle valves with input inlets having connecting portions that extend from a body portion of the housing in opposite directions. This affords more room for each input connection to be made to the each shuttle valve.

In a preferred embodiment of the invention, a first input inlet leading to the first shuttle and the output outlet each have connecting portions that extend from a body portion of the housing in opposite directions. This again makes it easier to make connections to the valve assembly.

The housing may have an axis defined by the connecting portions of one or both of the first input inlet and the output outlet, both of these connecting portions extending in a transverse direction to connecting of the remaining input inlets when these are provided with connecting portions that extend from a body portion of the housing in opposite directions. In this way, connections to the assembly can be distributed fully around the body portion of the housing.

Also in a preferred embodiment of the invention, the segments are joined to each other by fixing means, for example one or more bolts, which may be undone so that the segments may be separated from each other in order to change the number of segments forming the assembly.

The assembly may therefore be temporarily disassembled either to add or reduce the number of segments and hence the number of shuttle valves in series, or to facilitate repair or cleaning of a shuttle valve inside the housing.

### BRIEF DESCRIPTION OF THE DRAWINGS

The invention will now be further described, by way of example only, and with reference to the accompanying drawings, in which:
Figure 1 is a cross-sectional view through a valve assembly according to a preferred embodiment of the invention, showing a housing formed from four segments inside of which are three shuttle valves connected in series;
Figure 2 is an end view of the valve assembly of Figure 1, taken in the direction of line II-II of Figure 1;
Figure 3 is an exploded perspective view of the valve assembly of Figure 1, showing how the segments forming the assembly may be taken apart or assembled;
Figure 4 is a schematic representation of a single "OR" gate formed from a shuttle valve; and
Figure 5 is a schematic representation of the valve assembly of Figure 1, using the "OR" gate representation of Figure 4 and showing how the series shuttle valves form three series "OR" gates split between different segments of the valve assembly.

### DETAILED DESCRIPTION

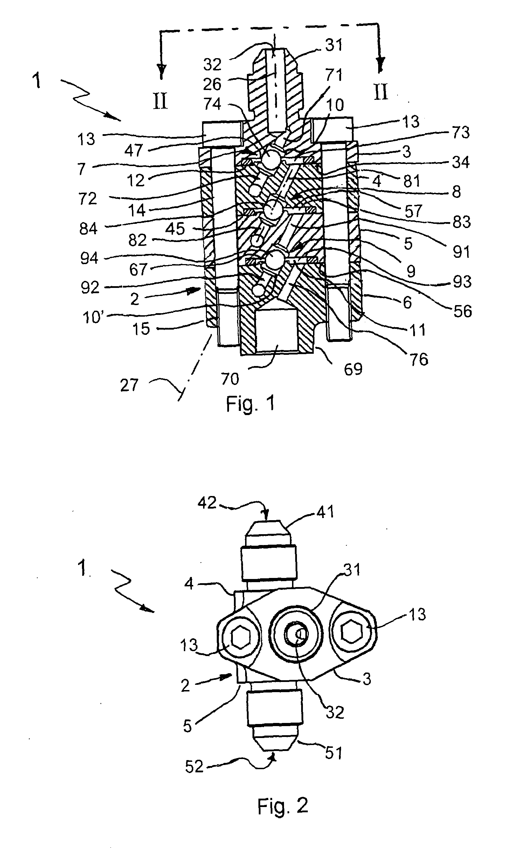

Figures 1 and 2 show a valve assembly 1 according to a preferred embodiment of the invention, The valve assembly is formed from a housing 2 which has four segments 3, 4, 5, 6 inside of which are three shuttle valves 7, 8, 9 connected in series with each other. One shuttle valve 7 is the "first" or most downstream shuttle valve, another shuttle valve 9 is the "final" or most upstream shuttle valve, and the remaining shuttle valve 8 is an "intermediate" shuttle valve being upstream of the first shuttle valve 7 and downstream of the final shuttle valve 9.

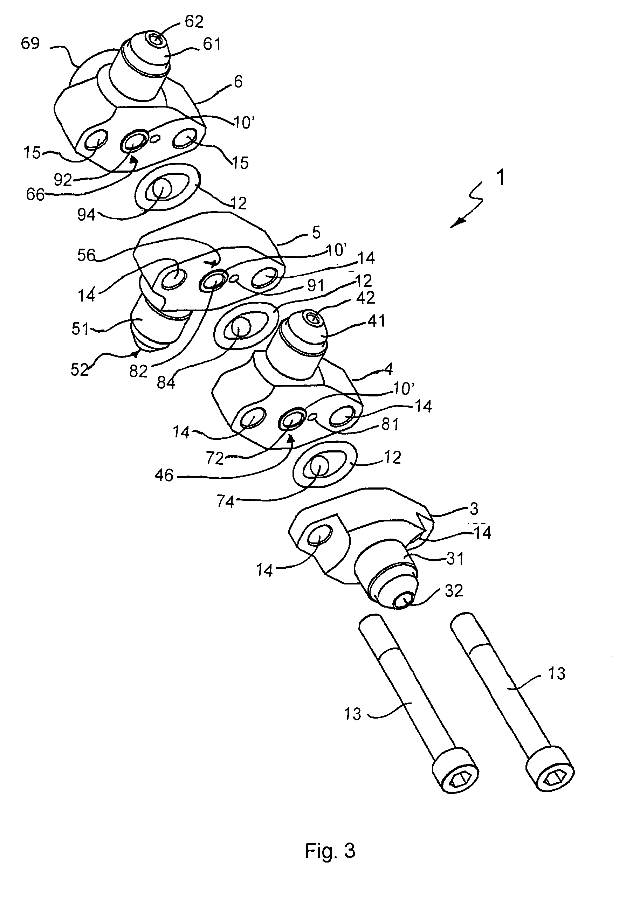

Referring now also to Figure 3, each shuttle valve 7, 8, 9 has two inlet ports 71, 72; 81, 82; 91, 92 and one outlet port 73, 83, 93 and one movable shuttle 74, 84, 94 in the form of a sliding sphere. The purpose of each shuttle is to seal off either one or the other of the inlet ports. A pair of inlet ports therefore leads to each movable shuttle and one outlet port leads from each moveable shuttle. Each shuttle 74, 84, 94 is free to move between opposing shuttle valve seats 10, 10' which terminate the inlet ports. The shuttle movement is driven by pressure differences in fluid (not shown) communicated through the inlet ports 71, 72; 81, 82; 91, 92. The arrangement is such that the inlet port conveying the greater pressure will move the shuttle 74, 84, 94 away from the valve seat 10 of inlet port having the greater pressure, thus opening this port, towards the opposite valve seat 10' of the inlet port having the lesser pressure, thus closing the other port.

Considering each pair of adjacent segments (3, 4) or (4, 5) or (5, 6) as being composed of a "first", or downstream segment and a "second" or upstream segment, each shuttle valve 7, 8, 9 is split across one of these pairs of adjacent segments, with one inlet port 71, 81, 91 being in the downstream segment and the other inlet port 72, 82, 92 and the outlet port 73, 83, 93 being in the upstream segment. The outlet port of each shuttle valve includes a void 11 that extends along a generally planar interface 34, 45, 56 between adjacent segments 3, 4, 5 of the housing 2. Each void 11 is within a recess 47, 57, 67 in one or both of the segments along the interface where adjacent segments meet. Here, the recess 47, 57, 67 is a formed by a shallow cylindrical cut-out in the downstream segment and an opposing planar surface 46, 56, 66 in the adjacent upstream segment. Each void 11 is laterally bounded by a circumferentially sealing O-ring 12 that surrounds the movable shuttle 74, 84, 94 and which is compressed within the recess between adjacent segments. The valve seat 10 in the downstream segment is formed within the recess 47, 57, 67 and the valve seat 10' in the upstream segment is formed as an annular projection from the planar surface 46, 56, 66.

The inlet ports 71, 72; 81, 82; 91, 92 each extend through the housing 2 to connect with corresponding input connecting portions 31, 41, 51, 61, one for each segment 3, 4, 5, 6. Each input connecting portion 31, 41, 51, 61 is integrally formed with its segment 3, 4, 5, 6 and provides a corresponding input inlet 32, 42, 52, 62 for communicating pressurised fluid (not shown) with the corresponding movable shuttle 74, 84, 94.

The outlet port 93 from the final downstream shuttle valve 9 leads to an output connecting portion 69 for the final downstream segment 6. The output connecting portion 69 is also integrally formed with its segment 6 and provides a corresponding output outlet 70 for communicating pressurised fluid from the final downstream movable shuttle valve 9.

The outlet port 73, 83 of each downstream shuttle valve 7, 8 leads into one of the two inlet ports 82, 92 of the adjacent upstream shuttle valve 8, 9. Therefore, the first shuttle valve 7 receives at two inlet ports 71, 72 pressurised fluids from two input inlets 32, 42. Each subsequent downstream shuttle valve 8, 9 receives at one inlet port 81, 91 pressurised fluid from one input inlet 52, 62 and at the other inlet port 82, 92 pressurised fluid from the adjacent downstream outlet port 73, 83. In this manner, each shuttle valve is connected in series with adjacent downstream and/or upstream shuttle valves.

The first input inlet 32 extends along an axis 26 in one longitudinal direction away from a generally elongate main or body portion of the housing 2 while the output outlet 70 extends parallel with the axis 26 in an opposite direction away from the body portion of the housing 2. The connecting portions 31, 69 of the first input inlet 32 and the output outlet 62 extend in opposite parallel directions being laterally offset from each other. Each of the other connecting portions 41, 51, 61 of the other input inlets 42, 52, 62 extends transversely away from the body portion of the housing on alternate sides of the housing 2. In this example, the connecting portions 41, 51, 61 and the generally planar interfaces 34, 45, 56 between adjacent segments 3, 4, 5 of the housing 2 all extend at right angles to the axis 26 of the input inlet 32.

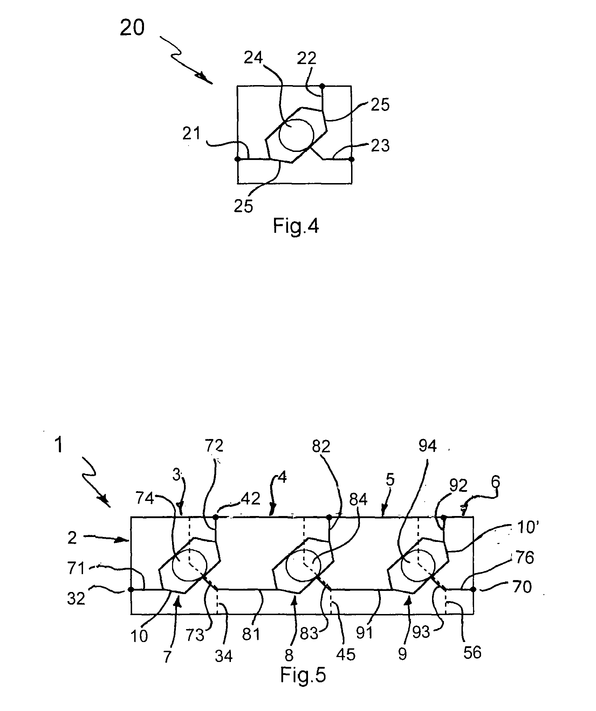

Because the movable shuttles 74, 84, 94 will automatically move to connect the highest pressure source at the inlet ports with the outlet port, each shuttle valve 7, 8, 9 acts as an "OR" gate. A schematic representation 20 of such an "OR" gate is shown in Figure 4, which has two inlet ports 21, 22, one outlet port 23, and one movable shuttle 24 that moves between opposite valve seats 25 under the action of pressure differences at the inlet ports 21, 22.

The valve assembly 1 can be represented schematically in a similar manner, as shown in Figure 5, where three such "OR" gates are connected in series, and where features corresponding with those described above are labelled using the same reference numerals. The effect of connecting three shuttle valves 7, 8, 9 in series is that the input inlet 32, 42, 52, 62 having the greatest pressure is automatically connected with the output outlet 72.

Referring now again to Figures 1 to 3, the four segments are held together by a pair of bolts 13 each of which passes through aligned clearance holes 14 in the first and intermediate housing segments 3, 4, 5. Each bolt 13 is in threaded engagement with a tapped hole 15 in the end-most final segment 6. Alternatively, the bolts 13 could connect in the opposite direction with the tapped hole (not shown) being provided in the end-most first segment 3.

The bolts 13 may be undone in order to separate the segments 3, 4, 5, 6 and other components of the assembly 1, as illustrated in Figure 3. The intermediate segments 4, 5 may be identical, however, in the present example the intermediate segments are not identical but similar, coming in two varieties, which could be termed "right-handed" or "left-handed" versions, the difference in handedness being the orientation of the projecting connecting portions 41, 51 either to the right or left as viewed along the flow direction from the first segment 3 to the final segment 6. As can be seen from Figure 3, if the downstream intermediate segment 4 is taken as being "right-handed" then the adjacent upstream segment 5 will be "left-handed". These two similar versions of intermediate segments 4, 5 are mirror image reflections of each other through a plane defined by the length of the bolts 13.

The first and final housing segments 3, 6 have, respectively, the same downstream and upstream shuttle valve configurations as those of the intermediate segments 4, 5. Therefore, intermediate segments may be added or removed to change the number of shuttle valves in series within the assembly. During re-assembly, it may be necessary to use different bolts 13 having an appropriate length, although as can be seen from Figure 1, the ends of the bolts are free to pass through an open end of the threaded bore 15, so that the one type of bolt can join different numbers of segments together. At a minimum, there may be no intermediate segments so that the assembly has just one shuttle valve. The maximum number of shuttle valves will be limited only by practical considerations such as cumulative pressure drop through a very large number of series shuttle valves, or the maximum length of available bolts 13.

The invention provides therefore provides a modular valve assembly 1, which can readily be disassembled and re-assembled to facilitate repair or maintenance or to vary numbers of shuttle valves.

As can be seen from Figures 1 and 3, when there are just two segments 3, 6 each segment would have one input inlet 32, 62, the first downstream segment 3 having one input inlet 32 that connects with the first inlet port 71 of a single shuttle valve and the second upstream segment having the other input inlet 62 that connects with a second inlet port 92 of this shuttle valve. The second upstream segment 6 has the output outlet 72, the outlet connecting with the outlet port 93 of this shuttle valve. In the case of the first segment 3, the inlet port 71 connects directly with input inlet 32. In the case of the second upstream segment 6, the outlet port 93 connects with the output outlet 72 via a connecting channel 76.

One important feature of the modular arrangement described above is the alignment of the inlet ports 71, 72, 81, 82, 91, 92 and the connecting channel 76. Each pair of inlet ports to a shuttle valve 7, 8, 9 extends along a common axis 27 tilted relative to the longitudinal axis 26 through the housing 2 by an angle which is preferably between about 10° and about 45°, and which in the present example is about 18°. The connecting channel 76 is also tilted at this same angle. This, together with the transverse orientation of the void 11 forming each outlet port along the generally planar interfaces 34, 45, 56 between adjacent segments 3, 4, 5, 6 of the housing 2 permits the inlet port of each upstream shuttle valve and/or the connecting channel 76 to tap into the outlet port of the preceding shuttle valve.

This provides a particularly compact and convenient arrangement for forming a modular multi-shuttle valve assembly having a capability to vary the number of shuttle valves.

The segments forming the housing may be made from any suitable metallic or plastic materials, using known machining, casting or injection moulding techniques. The O-ring may be made from an appropriate material depending on the expected type of operating fluid and operating temperature, for example a nitrile material, optionally sealed with silicone grease. If necessary, a gasket (not shown) can be provided in the in-contact circumferential portions of the planar interface 34, 45, 56.

The passive shuttle valve assembly described above can be used as a variable number of "OR" gates in a fluid control circuit (not shown). The control circuit may employ a normal system inlet 32, and alternate or emergency system input inlets 42, 52, 62, and an output outlet 72 which then operates an actuating unit. In a further variation of the invention, not shown in the drawings, the shuttle valve assembly may be used to operate more than one such actuating unit by connecting in parallel additional outlet ports to such units, which may be formed integrally in a modified final segment. When the shuttle valves are in the normal operation position, fluid has a free flow from the normal system input inlet 32, through the valve assembly 1, and out through the output outlet 72 to the actuating unit. Each shuttle 74, 84, 94 is seated against the valve seat 10' of the alternate system input inlets 42, 52, 62 and held there by normal system pressure.

Optionally the shuttle valves may include a biasing spring (not shown) which engages each shuttle 74, 84, 94 with one of the valve seats 10, 10', such as the valve seat 10' of the alternate system input inlets 42, 52, 62. The shuttle then remains in this position until the alternate system is activated by a pressure difference sufficient to overcome the spring bias. This action directs fluid under pressure from one of the alternate system input inlets having the highest pressure to one of the shuttle valves 7, 8, 9 and forces the corresponding shuttle 74, 84, 94 from the alternate system inlet port 72, 82, 92 towards the normal system inlet port 71, 81, 91. Fluid from the alternate system then has a free flow to the corresponding outlet port 73, 83, 93, but is prevented from entering the normal system by the shuttle, which engages with the normal system valve seat 10 to seal off the normal system inlet port 71, 81, 91.

Although the invention has been described above in mainly in terms of a passive spherical shuttle 74, 84, 94 without spring loading, the shuttle may have other forms, for example: sliding plunger; spring-loaded piston; spring-loaded ball; or spring-loaded poppet. In shuttle valves that are designed with a spring, the shuttle is normally held against the alternate system inlet port by the spring.

The form of the interface 34, 45, 56 between adjacent segments 3, 4, 5, 6 may also be varied from the planar form described above, although the planar form may be particularly convenient to manufacture, and may also in use facilitate the making of a good seal between adjacent segments.

The invention therefore provides a convenient and economical modular shuttle valve assembly for use in fluid control systems having a variable number of shuttle valves.

## Claims

1. A valve assembly, comprising a housing, at least one shuttle valve inside the housing including a first shuttle valve and optionally at least one additional downstream shuttle valve connected in series with the first shuttle valve, wherein:
- the or each shuttle valve has two inlet ports and one outlet port and a movable shuttle;
- the housing has at least two segments, the or each shuttle valve being split across adjacent first and second segments with one inlet port being in said first segment and the other inlet port being in said second segment; and
the outlet port of the or each shuttle valve includes a void that extends along an interface between adjacent segments of the housing.

2. A valve assembly as claimed in Claim 1, in which there is just one shuttle valve split across adjacent first and second segments, comprising two input inlets and one output outlet, said inlets and outlet extending through the housing to connect with said shuttle valve, wherein:
- each segment has one input inlet, the first segment having one input inlet that connects with a first inlet port of said shuttle valve and the second segment having the other input inlet that connects with a second inlet port of said shuttle valve; and
- the second segment has the output outlet, said outlet connecting with the outlet port of said shuttle valve.

3. A valve assembly as claimed in Claim 1, in which there are at least two of said shuttle valves connected in series including said first shuttle valve, a final downstream shuttle valve and optionally one or more intermediate shuttle valves, the assembly comprising at least three input inlets and one output outlet, said inlets and outlet extending through the housing to connect with said shuttle valves, wherein:
- each segment has one input inlet and each input inlet connects with a first inlet port of a shuttle valve;
- one segment has the output outlet, said output outlet connecting with the outlet port of the final shuttle valve; and
- for each pair of adjacent shuttle valves connected in series the outlet port of the downstream shuttle valve is connected with a second inlet port of the upstream shuttle valve.

4. A valve assembly as claimed in Claim 3, in which there are at least three of said shuttle valves connected in series, the assembly comprising at least two identical or mirror image intermediate segments.

5. A valve assembly as claimed in Claim 3 or Claim 4, in which at least two adjacent shuttle valves have input inlets having connecting portions that extend from a body portion of the housing in opposite directions.

6. A valve assembly as claimed in any of Claims 2 to 5, in which a first input inlet leading to the first shuttle and the output outlet each have corresponding connecting portions that extend from a body portion of the housing in opposite directions.

7. A valve assembly as claimed in Claim 6 when appendant from Claim 5, in which the housing has an axis defined by the connecting portion(s) of one or both of the first input inlet and the output outlet, both said connecting portions extending in a transverse direction to connecting portions of the remaining input inlets.

8. A valve assembly as claimed in Claim 6 or Claim 7, in which the connecting portions of the first input inlet and the output outlet extend in opposite parallel directions.

9. A valve assembly as claimed in any preceding claim, in which each of the segments is joined to the or each adjacent segment along a generally planar interface.

10. A valve assembly as claimed in any Claim 9, in which said void of the or each shuttle valve is formed from a recess in one of both adjacent segments along an interface between said adjacent segments.

11. A valve assembly as claimed in any Claim 10, in which said recess has a circumferential seal.

12. A valve assembly as claimed in any preceding claim, in which adjacent segments meet along a generally planar interface between said adjacent segments.

13. A valve assembly as claimed in any preceding claim, in which the segments are joined to each other by fixing means which may be undone and re-done so that the segments may be separated from each other and then joined together again in order to change the number of segments forming the assembly.

14. A valve assembly as claimed in Claim 13, in which the fixing means comprises one or more bolts threaded to an end-most segment of the housing.
